# EUROPÄISCHE PATENTSCHRIFT

(11) **EP 2 422 906 B1**
(45) Veröffentlichungstag und Bekanntmachung des Hinweises auf die Patenterteilung: **29.07.2015**
(21) Anmeldenummer: 11006944.0
(22) Anmeldetag: 25.08.2011
(51) Int. Cl.: B23B 31/08

(54) **Werkzeughalter mit Ausweichmechanismus sowie Verfahren zu dessen Herstellung**
Tool holder with avoidance mechanism and method for its manufacture
Support d'outil doté d'un mécanisme d'évitement et son procédé de fabrication

(30) Priorität: 26.08.2010 DE 102010035561
(43) Veröffentlichungstag der Anmeldung: 29.02.2012
(73) Patentinhaber: WSEngineering GmbH & Co. KG, 78054 Villingen-Schwenningen (DE)
(72) Erfinder: Lay, Norbert, Dr., 71149 Bondorf (DE)
(74) Vertreter: Herden, Andreas F.

(56) Entgegenhaltungen:
- DE-A1- 10 340 052
- DE-A1-102008 026 534
- DE-B3-102005 046 160
- JP-A- 11 138 487
- JP-A- 60 131 106
- JP-U- H0 285 585
- US-A- 4 614 084
- US-A- 4 720 923

## Beschreibung

### Gebiet der Erfindung

Die Erfindung betrifft einen Werkzeughalter mit einem Ausweichmechanismus gemäß dem Oberbegriff des Anspruchs 1, welcher ab einer vorgegebenen bzw. einstellbaren Kraft das Werkzeug ausweichen lässt. Weiter betrifft die Erfindung ein Verfahren gemäß dem Oberbegriff des Anspruchs 8 zur Herstellung eines Werkzeughalters mit einem Ausweichmechanismus.

### Hintergrund der Erfindung

Werkzeughalter mit einem Ausweichmechanismus sind bekannt.

So zeigt beispielsweise die deutsche Patentschrift DE 103 54 474 B4 einen Werkzeughalter mit einem kraftgesteuerten Ausweichmechanismus. Dieser Werkzeughalter umfasst mehrere pneumatische Kolben, die das Werkzeug, insbesondere ein Werkzeug mit einer Antriebswelle, beispielsweise zum Fräsen und Entgraten, zentrieren. Ab einer vorgegebenen Kraft, welche vom Druck in den Kolben abhängt, weicht das Werkzeug in einer senkrecht zum Werkzeughalter bzw. zur Achse einer Antriebswelle des Werkzeugs liegenden Ebene aus. So kann das Werkzeug beispielsweise mit einer definierten Kraft entlang der Kante eines Werkstücks fahren. Weiter können durch einen Ausweichmechanismus auch Beschädigungen des gehaltenen Werkzeuges aufgrund plötzlich auftretender Kräfte, wenn beispielsweise das Rohmaterial von der normalen Form abweicht und das Werkzeug gegen eine hohe Kante fährt, vermieden werden.

Die bekannten Werkzeughalter sind aufwendig herzustellen und dementsprechend teuer. Aufgrund der Vielzahl an verwendeten Teilen ist es insbesondere aufwendig, einen Ausweichmechanismus mit der geforderten hohen Maßhaltigkeit herzustellen. Weiter sind die bekannten Werkzeughalter relativ groß und schwer und können daher für manche Maschinen nicht verwendet werden.

### Aufgabe der Erfindung

Der Erfindung liegt demgegenüber die Aufgabe zugrunde, einen Werkzeughalter mit einem Ausweichmechanismus bereitzustellen, welcher sich einfach und preiswert herstellen lässt.

Eine weitere Aufgabe der Erfindung ist es, einen möglichst leichten und zuverlässigen Werkzeughalter mit einem Ausweichmechanismus bereitzustellen.

### Zusammenfassung der Erfindung

Die Erfindung wird bereits durch einen Werkzeughalter mit einem Ausweichmechanismus sowie durch ein Verfahren zur Herstellung eines Werkzeughalters mit einem Ausweichmechanismus nach einem der unabhängigen Ansprüche gelöst.

Bevorzugte Ausführungsformen und Weiterbildungen der Erfindung sind den jeweiligen Unteransprüchen zu entnehmen.

Die Erfindung betrifft einen Werkzeughalter mit einem Ausweichmechanismus, welcher einen Halter zur Aufnahme eines Werkzeugs umfasst.

Insbesondere umfasst der Werkzeughalter einen röhrenförmigen Halter zur Aufnahme eines Werkzeugs mit einer Antriebsspindel, beispielsweise eines elektrisch oder pneumatisch betriebenen Motors, an welchem beispielsweise ein Werkzeug zum Fräsen oder Entgraten befestigt ist.

Der Halter ist in einem Gehäuse angeordnet und gegenüber dem Gehäuse verschiebbar, was das Wesen eines Ausweichmechanismus ausmacht.

Im Sinne der Erfindung kann sowohl ein Halter vorgesehen sein, welcher gegenüber dem Gehäuse schwenkbar ist als auch, wie es bei einer bevorzugten Ausführungsform der Erfindung vorgesehen ist, ein Halter, welcher sich in einer Ebene senkrecht zu einer Rotationsachse des Halters oder zur Antriebsachse des Werkzeugs verschieben lässt.

Gemäß der Erfindung ist der Halter mittels zumindest drei Faltenbälgen unter Anlegung eines pneumatisch oder hydraulisch erzeugten Drucks zentrierbar, wobei die Faltenbälge mit mindestens einem Gehäuseabschnitt einstückig ausgebildet sind.

Der Erfinder hat herausgefunden, dass sich über die Verwendung von Faltenbälgen, welche einen integralen Bestandteil des Gehäuses bilden, ein einfach herzustellendes Auslenksystems bereitstellen lässt, welches darüber hinaus noch weniger störanfällig ist und, insbesondere sofern dieses aus Kunststoff ausgebildet ist, relativ leicht ist.

Unter einstückig im Sinne der Erfindung wird insbesondere verstanden, dass der Gehäuseabschnitt und die Faltenbälge aus demselben Material bestehen und dass diese in einem Arbeitsgang hergestellt wurden, so dass keine nachträgliche Verbindung durch etwa Schweißen oder Kleben erfolgt ist.

Dies ist insbesondere mit einem sogenannten Rapid-Prototyping-Verfahren möglich, insbesondere mittels selektivem Lasersintern. Ein derartiges Rapid-Prototyping-Verfahren hat zudem den Vorteil, dass das Gehäuse die Faltenbälge und/oder den Halter umschließen kann. Es kann also auf Montageöffnungen verzichtet werden, so dass der erfindungsgemäße Werkzeughalter besonders kompakt ausgebildet werden kann.

Bei einer bevorzugten Ausführungsform der Erfindung ist der Werkzeughalter formschlüssig in allen Raumrichtungen in dem Gehäuse gehalten und nur entlang einer Ebene im Wesentlichen senkrecht zu einer Mittelachse des Gehäuses oder des Halters verschiebbar.

Der Halter ist somit im Gehäuse eingeschlossen und lediglich eine vorgegebene Strecke senkrecht zu seiner Mittelachse verschiebbar.

Vorzugsweise werden Halter und Gehäuse in einem Arbeitsschritt mittels eines Rapid-Prototying-Verfahrens hergestellt, derart dass der Halter nicht herausnehmbar in dem Gehäuse angeordnet ist.

Bei einer bevorzugten Ausführungsform weist der Halter zumindest einen, vorzugsweise zwei Führungskrägen auf, welche in einer umlaufenden Nut auf der Innenseite des Gehäuses angeordnet ist.

Es greift also ein ringförmiger Kragen, welcher aus dem ansonsten im Wesentlichen röhrenförmig ausgebildeten Halter heraussteht, in eine korrespondierende umlaufende Nut des Gehäuses ein. Hierdurch ist der Halter in Richtung seiner Mittelachse nicht verschiebbar, ermöglicht aber ein definiertes Ausweichen senkrecht zur Mittelachse. Es hat sich herausgestellt, dass sich Führungskragen und Nut ebenfalls mittels eines Rapid-Prototyping-Verfahrens mit erstaunlich hoher Maßhaltigkeit bereitstellen lassen.

Vorzugsweise ist das Gehäuse und die zumindest drei Faltenbälge einstückig ausgebildet und bestehen im Wesentlichen aus einem Kunststoff, insbesondere aus einem Polyamid, welches relativ leicht und schlagzäh ist.

Bei einer Weiterbildung der Erfindung umfasst das Gehäuse ein Gehäuseunterteil, in welchem der Halter angeordnet ist sowie ein Gehäuseoberteil, welches vom Gehäuseunterteil beabstandet ist und mittels mehrerer Arme mit dem Gehäuseunterteil verbunden ist.

Das Gehäuseoberteil kann der Befestigung des Werkzeugs an einer Maschine dienen. Durch die Beabstandung von Gehäuseoberteil und Gehäuseunterteil ist der Halter auch von der Rückseite, also der der Antriebswelle eines Werkzeugs gegenüberliegenden Seite, zugänglich und es kann beispielsweise an einer pneumatisch betriebenen Antriebsspindel die Druckluftzufuhr auf einfache Weise von der Rückseite her angebracht werden.

Bei einer Weiterbildung der Erfindung kommen die Faltenbälge in einer zentrierten Position jeweils an einem Anschlag zur Anlage. So lässt sich eine exakt definierte Mittelposition erreichen. Die Anschläge sind vorzugsweise integraler Bestandteil des Gehäuses und ebenfalls mittels eines Rapid-Prototyping-Verfahrens hergestellt.

Bei einer Weiterbildung der Erfindung umfasst das Gehäuse integrierte Kanäle zur Zuführung eines Fluids zu den Faltenbälgen.

Vorzugsweise sind die Kanäle aller Faltenbälge innerhalb des Gehäuses miteinander verbunden, so dass am Gehäuse nur an einer Stelle ein Druckluftschlauch angeschlossen werden muss.

Die Erfindung betrifft des Weiteren einen Werkzeughalter mit einem Ausweichmechanismus, insbesondere einen vorstehend beschriebenen Werkzeughalter, welcher einen Halter zur Aufnahme eines Werkzeugs umfasst, welcher in einem Gehäuse angeordnet ist und gegenüber dem Gehäuse verschiebbar ist. Der Halter ist aber in dem Gehäuse eingeschlossen, so dass dieser nicht herausnehmbar ist. Gemäß der Erfindung weist das Gehäuse zumindest ein Rückstellmittel zur Zentrierung des Halters auf, welches im Sinne vorstehender Definitionen einstückig mit zumindest einem Gehäuseabschnitt ausgebildet ist.

Bei dem Rückstellmittel kann es sich beispielsweise um den vorstehend beschriebenen Faltenbalg handeln. Es ist aber auch denkbar, die Rückstellmittel als Federn, insbesondere als gekrümmte oder mäanderförmige Blattfedern, auszubilden, mit denen der Halter zentriert wird. Auch derartige Federn lassen sich beispielsweise mittels eines Rapid-Prototyping-Verfahrens in dem Gehäuse integrieren.

Die Erfindung betrifft des Weiteren einen Werkzeughalter mit einem Ausweichmechanismus, welcher, wie vorstehend beschrieben, einen Halter zur Aufnahme eines Werkzeugs umfasst, der gegenüber einem Gehäuse verschiebbar angeordnet ist, und wobei der Werkzeughalter zumindest ein Rückstellmittel zur Zentrierung des Halters aufweist.

Im Unterschied zur vorstehend beschriebenen Ausführungsform, bei welchem eine axiale Verschiebung des Halters durch einen Kragen, der in eine Nut greift, verhindert wird, sind gemäß der Erfindung zumindest drei Auslenkgelenke vorgesehen, mit welchen der Halter mit dem Gehäuse verbunden ist. Bei den Auslenkgelenken kann es sich beispielsweise um Stäbe handeln, welche beispielsweise ebenfalls mittels Rapid-Prototyping einstückig aus dem gleichen Material wie das Gehäuse des Werkzeughalters hergestellt werden und vorzugsweise auch einstückig mit dem Halter verbunden sind.

Die Auslenkgelenke fixieren den Halter in axialer Richtung und ermöglichen ein Ausweichen des Halters im Wesentlichen senkrecht zu seiner Mittelachse.

Diese Ausführungsform der Erfindung hat den Vorteil, dass auf ineinander greifende Nuten und Stege verzichtet werden kann, welche unter Umständen empfindlich gegenüber eintretenden Spänen sind.

Vielmehr kann, wie es bei einer bevorzugten Ausführungsform der Erfindung vorgesehen ist, das Gehäuse des Werkzeughalters oben und unten teilweise offen ausgebildet sein, wodurch Späne durch den Werkzeughalter hindurch fallen können.

Die Rückstellung des Halters erfolgt nicht allein über die Auslenkgelenke, sondern es ist zumindest ein zusätzliches Rückstellmittel, insbesondere in Form eines Faltenbalges vorgesehen, um eine definierte Rückstellkraft erzeugen zu können.

Die Erfindung betrifft des Weiteren ein Verfahren zur Herstellung eines Werkzeughalters mit einem Ausweichmechanismus, insbesondere eines vorstehend beschriebenen Werkzeughalters, wobei mittels eines Rapid-Prototyping-Verfahrens in einem Arbeitsgang ein Gehäuse mit zumindest drei Faltenbälgen und ein an oder in dem Gehäuse angeordneter Halter zur Aufnahme eines Werkzeugs mit einer Antriebswelle hergestellt werden. Der Halter ist in dem Gehäuse derart angeordnet, dass dieser eingeschlossen und nicht herausnehmbar ist oder der Halter ist mit einem Gehäuse des Werkzeugshalters einstückig ausgebildet. Vorzugsweise wird der Werkzeughalter mittels selektiven Lasersinterns aus einem Kunststoff, insbesondere einem Polyamid, hergestellt.

Durch die Erfindung lässt sich ein sehr maßhaltiger, wenig störfälliger und leichter Halter mit einem Ausweichmechanismus bereitstellen.

Um eine Bewegung in nur einer Ebene zuzulassen, wird bei einer bevorzugten Ausführungsform der Erfindung ein Halter mit zumindest zwei umlaufenden Führungskrägen hergestellt, wobei gleichzeitig in dem Gehäuse zumindest zwei korrespondierende Führungsnuten gebildet werden.

### Beschreibung der Zeichnungen

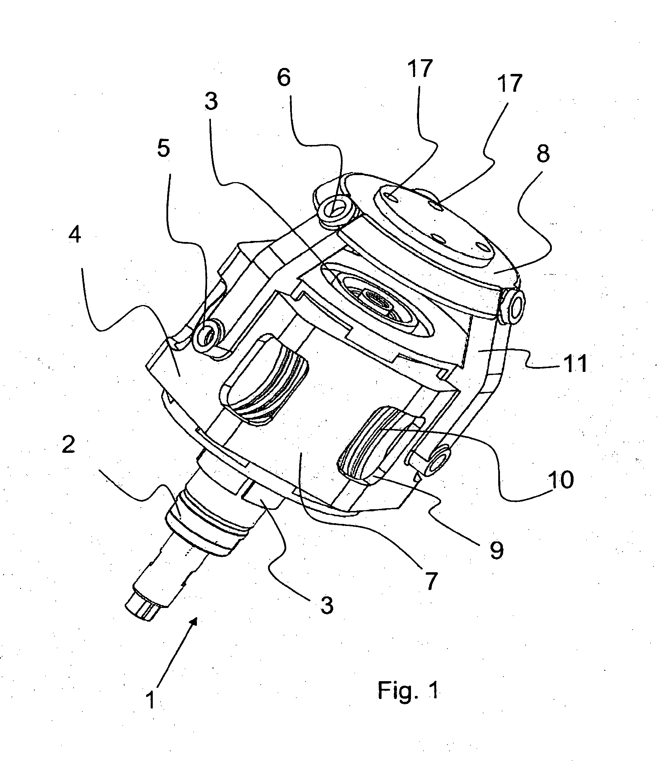

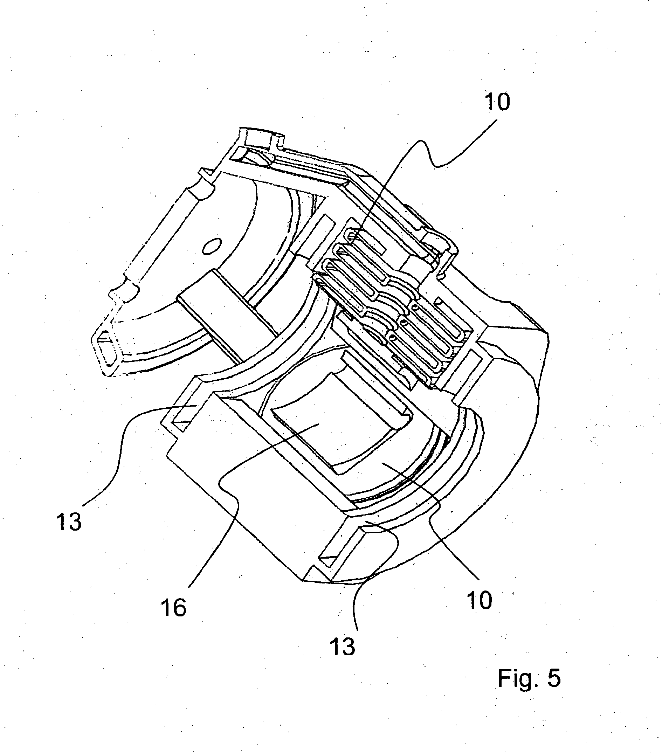

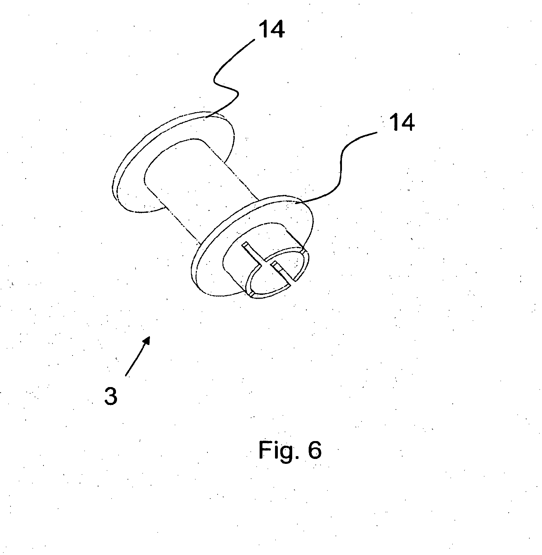

Die Erfindung soll im Folgenden an Hand eines schematisch dargestellten Ausführungsbeispiels Bezug nehmend auf die Figuren Fig. 1 bis Fig. 9 näher erläutert werden.

Fig. 1 zeigt, schematisch dargestellt, eine perspektivische Ansicht eines Ausführungsbeispiels eines erfindungsgemäßen Werkzeughalters 1.

Der Werkzeughalter 1 umfasst ein Gehäuse 4, welches aus einem Gehäuseoberteil 8 und einem Gehäuseunterteil 7 besteht. Gehäuseunterteil 7 und Gehäuseunterteil 8 sind durch drei Arme 11 miteinander verbunden.

In dem Gehäuseunterteil 7 sitzt ein Halter 3 zur Aufnahme eines Werkzeugs, in diesem Ausführungsbeispiel eines Druckluftmotors 2. Um ein derartiges, auch als Antriebsspindel bezeichnetes Werkzeug aufzunehmen, ist der Halter 3 im Wesentlichen röhrenförmig ausgebildet. Durch die Beabstandung von Gehäuseoberteil 8 und Gehäuseunterteil 7 ist der Halter 3 auch von hinten zugänglich und es kann so beispielsweise eine Druckluftversorgung leicht angeschlossen werden.

Um ein Ausweichsystem bereitzustellen, sind um den Halter 3 drei Faltenbälge 10 angeordnet. Die Faltenbälge 10 sind durch die Fenster 9 sichtbar und können so auf Funktion und mögliche Beschädigungen kontrolliert werden.

Über Druckluftanschlüsse 5, 6 werden die Faltenbälge 10 mit Druckluft versorgt. Es ist dabei denkbar, dass die Druckluftanschlüsse 5 und 6 sowie alle weiteren Druckluftanschlüsse auf jedem Arm über Kanäle miteinander verbunden sind. Insbesondere kann ein Kanal (nicht dargestellt) innerhalb des Gehäuseoberteils 8 verlaufen. So kann ein Druckluftschlauch (nicht dargestellt) an einer geeigneten Stelle angeschlossen werden und die anderen verbleibenden Druckluftanschlüsse können verschlossen werden. Alternativ ist auch denkbar, für jeden Faltenbalg 10 einen eigenständigen Druckluftanschluss vorzusehen. So kann an den Faltenbälgen ein unterschiedlicher Druck anliegen, wodurch der Ausweichmechanismus in einer Richtung steifer ist als in der anderen.

Zum Befestigen an einer Maschine umfasst das Gehäuseoberteil 8 Bohrungen 17 oder Gewinde.

Bis auf den Druckluftmotor 2 wurden in diesem Ausführungsbeispiel sämtliche Bestandteile in einem Arbeitsgang mittels selektiven Lasersinterns aus einem Polyamid hergestellt.

Der dargestellte Werkzeughalter ist besonders kompakt und weniger störanfällig und lässt sich preiswerter produzieren als dies bei bekannten Werkzeughaltern der Fall ist, welche aus einer Vielzahl aus Einzelteilen montiert werden müssen.

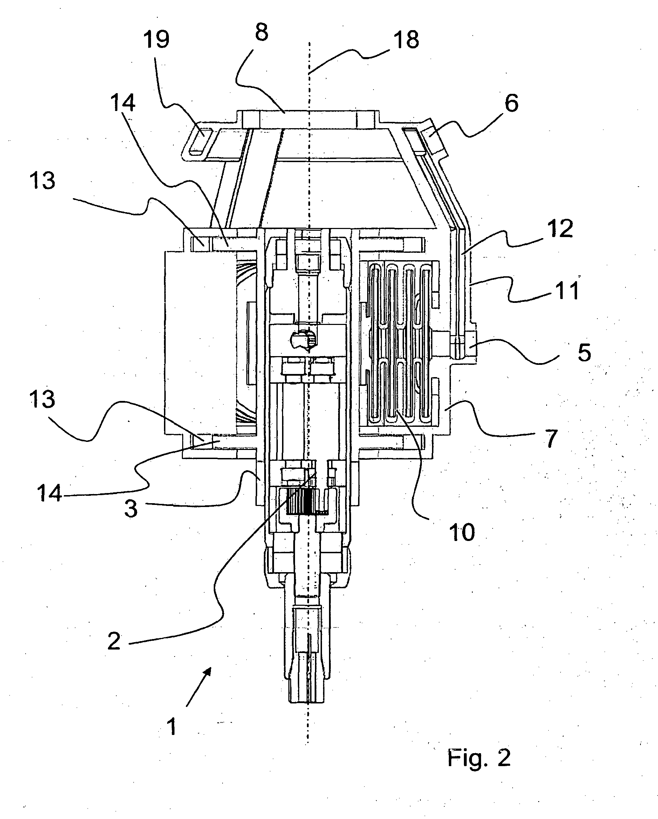

Fig. 2 zeigt eine Schnittansicht entlang der Mittelachse 18 des Werkzeughalters 1. Zu erkennen ist der röhrenförmige Halter 3 innerhalb dessen sich die Antriebsspindel in Form eines Druckluftmotors 2 befindet.

Der Halter 3 umfasst an den beiden Stirnflächen des Gehäuseunterteils 7 ringförmige Führungskrägen, welche im Wesentlichen senkrecht zur Mittelachse 18 in korrespondierenden Nuten 13 des Gehäuseunterteils 7 angeordnet sind.

Innerhalb dieser Nuten 13 ist der Halter 3 senkrecht zur Mittelachse 18 verschiebbar. Um eine Kraft in Richtung der Mittelachse 18 auszuüben und den Halter 3 in der Mittelposition zu zentrieren, sind im Gehäuseunterteil 7 drei Faltenbälge 10 verteilt.

Um diese Faltenbälge 10 mit Druckluft zu versorgen, weist das Gehäuse an den Armen 11, welche Gehäuseoberteil und Gehäuseunterteil miteinander verbinden, Druckluftanschlüsse 5, 6 auf, welche über jeweils einen Kanal 12 verbunden sind. In dem Gehäuseoberteil 8 befindet sich ein umlaufender Kanal 19, der die Kanäle 12 der einzelnen Arme miteinander verbindet. So genügt es, wenn an einem einzigen Druckluftanschluss ein Druckluftschlauch angeschlossen wird. Die verbleibenden Druckluftanschlüsse können sodann verschlossen werden.

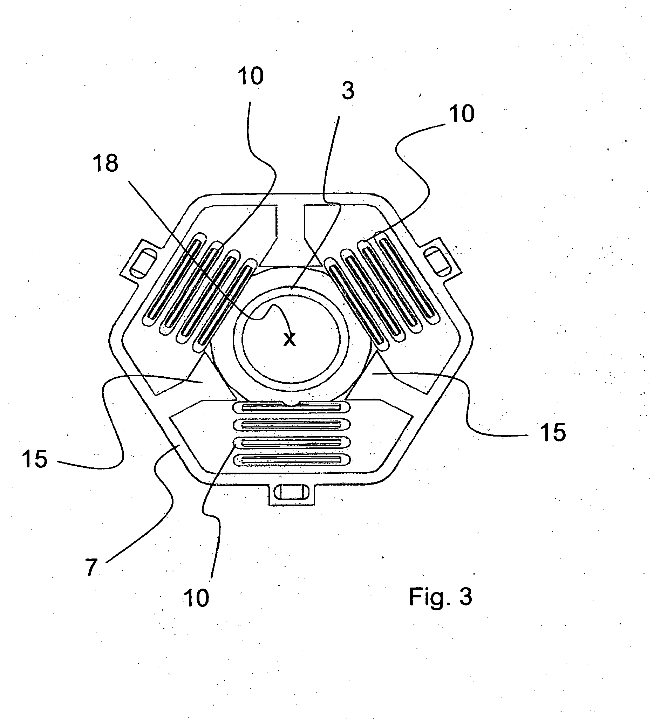

Fig. 3 zeigt eine Schnittansicht des Werkzeugshalters entlang einer senkrecht zur Mittelachse 18 verlaufenden Ebene des Gehäuseunterteils 7.

Das Gehäuseunterteil 7 ist in diesem Ausführungsbeispiel sechseckig ausgebildet, wobei drei Faltenbälge 10 entlang dreier Seitenwände des Gehäuses verteilt sind. Über die Faltenbälge 10 wird der Halter 3 zentriert. Dabei sind die Faltenbälge 10 nicht mit dem Halter 3 verbunden, damit diese bei angelegtem Druck nur gegenhalten.

An den verbleibenden Seiten des Gehäuseunterteils 7 befinden sich Fortsätze 15, welche einen Anschlag für die Faltenbälge 10 bilden, so dass bei angelegter Druckluft der Halter 3 zentriert ist.

Bezug nehmend auf diese Ausführungsform der Erfindung ist gut ersichtlich, dass anstelle der Faltenbälge 10 auch andere zentriermittel, insbesondere andere Federformen wie beispielsweise mechanische Federn wie Blattfeder, insbesondere mäanderförmig, oder Spiralfedern verwendet werden können.

Die Rückstellmittel, egal ob es sich um Faltenbälge 10 oder um Feder (nicht dargestellt) handelt, sind mittels Lasersintern zusammen mit dem restlichen Gehäuse in einem Arbeitsschritt hergestellt.

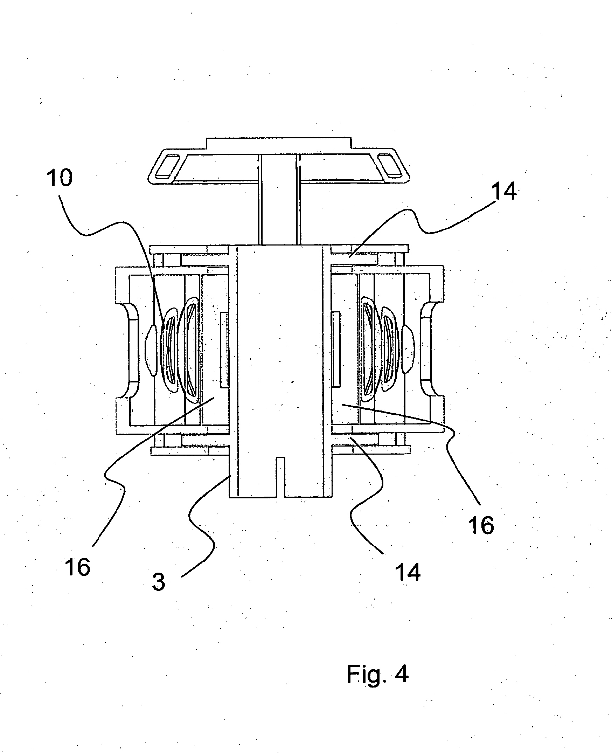

Fig. 4 zeigt eine weitere Schnittansicht entlang einer Mittelachse des Werkzeughalters.

Zu erkennen sind die Faltenbälge 10, welche den Halter 3 zentrieren und hierzu mit zwei Führungskrägen 14 in eine Nut des Gehäuses eingreifen.

Den Abschluss der Faltenbälge bilden Anlageplatten 16 mit einer gekrümmten Oberfläche, welche der Rundung des röhrenförmigen Halters 3 angepasst ist. Die Anlageplatten 16 sind ebenfalls einstückig mit den Faltenbälgen 10 und dem restlichen Gehäuse ausgebildet.

Fig. 5 zeigt eine weitere Schnittansicht in perspektivischer Darstellung entlang der Mittelachse des Werkzeughalters. In dieser Ansicht ist der Halter (3 in Fig. 1) zur Aufnahme des Werkzeugs ausgeblendet.

Zu erkennen sind die Faltenbälge 10, welche stirnseitig mit einer Anlageplatte 16, die der Kontur des Halters folgt, versehen sind. Weiter zu erkennen sind die randseitig angeordneten Führungsnuten zur Aufnahme des Halters (ausgeblendet).

Fig. 6 zeigt eine perspektivische Ansicht des Halters 3.

Der Halter 3 besteht aus einem röhrenförmigen Abschnitt, welcher im Wesentlichen an seinen Enden zwei ringförmig ausgebildete Führungskrägen 14 aufweist.

Bei Herstellung des Werkzeughalters wird auch der Halter 3 mittels eines Rapid-Prototyping-Verfahrens in einem Arbeitsgang hergestellt und ist so nicht herausnehmbar im Gehäuse des Werkzeughalters eingeschlossen.

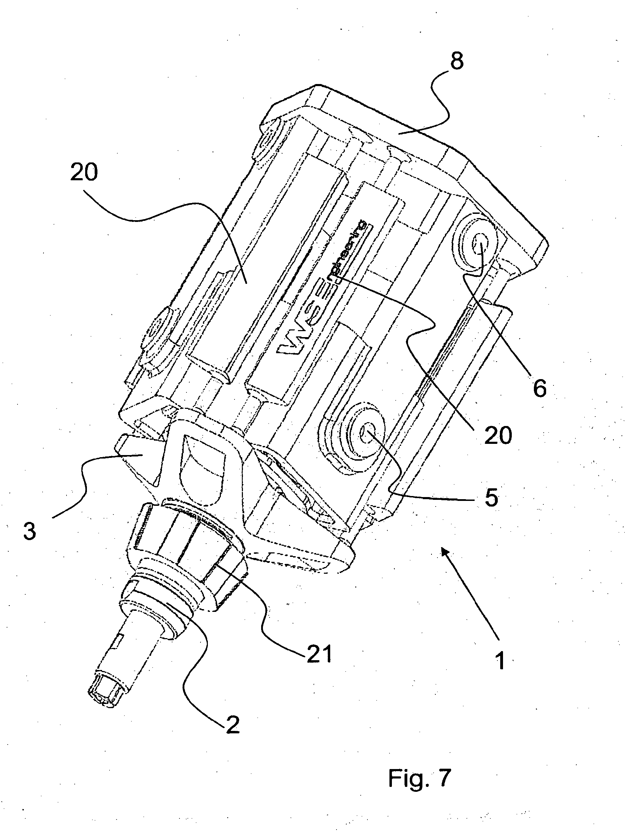

Bezugnehmend auf die Figuren Fig. 7 bis Fig. 9 soll eine alternative Ausführungsform der Erfindung erläutert werden, bei welcher der Werkzeughalter über Auslenkgelenke mit dem Halter verbunden ist.

Fig. 7 zeigt, schematisch dargestellt, eine perspektivische Ansicht eines Werkzeughalters 1. Der Werkzeughalter 1 ist in dieser Darstellung mit einem Druckluftmotor 2 ausgestattet, welcher in den Halter 3 geschoben ist und mit der Mutter 21 in dem Halter 3 festgehalten wird.

Im Unterschied zu dem zuvor dargestellten Ausführungsbeispiel ist der Halter 3 über Auslenkgelenke 20 mit dem Gehäuseoberteil 8 des Werkzeughalters 1 verbunden.

Es handelt sich in diesem Ausführungsbeispiel um drei Paar jeweils nebeneinander angeordnete Auslenkgelenke 20, welche am äußeren Rand des Gehäuseoberteils 8 angeordnet sind.

Der Halter 3 ist durch die Auslenkgelenke 20 in axialer Richtung fixiert und kann daher im Wesentlichen nur senkrecht zur Mittelachse des Druckluftmotors 2 bewegt werden. Die jeweils paarweise vorgesehenen Auslenkgelenke 20 verhindern, dass sich der Halter 3 verdrehen kann. Statt einer Anordnung von jeweils 2 nebeneinander angeordneten Auslenkgelenken wäre auch denkbar, jeweils nur ein Auslenkgelenk zu verwenden.

Um eine definierte Rückstellkraft zu erzeugen, umfasst der Werkzeughalter in diesem Ausführungsbeispiel ebenfalls drei Faltenbälge (nicht zu sehen), welche über die Druckluftanschlüsse 5 und 6 mit Druckluft versorgt werden können. Die Kanäle zur Druckluftversorgung liegen entsprechend der zuvor dargestellten Ausführungsform im Gehäuse(nicht zu sehen).

Auch bei diesem Ausführungsbeispiel ist der Werkzeughalter 1 mittels eines Rapid-Prototyping-Verfahrens hergestellt, das Gehäuse einschließlich des Gehäuseoberteils 8, die Auslenkgelenke 20 sowie der Halter 3 sind aus einem Stück ausgebildet.

Durch die Verwendung der Auslenkgelenke 20 kann auf den zuvor dargestellten Kragen, welcher in eine Nut greift, verzichtet werden. Der Werkzeughalter ist daher weniger anfällig gegenüber Spänen.

Vielmehr ist das Gehäuse des Werkzeughalters 1 teilweise offen ausgebildet, so dass Späne durch den Werkzeughalter 1 hindurch fallen können.

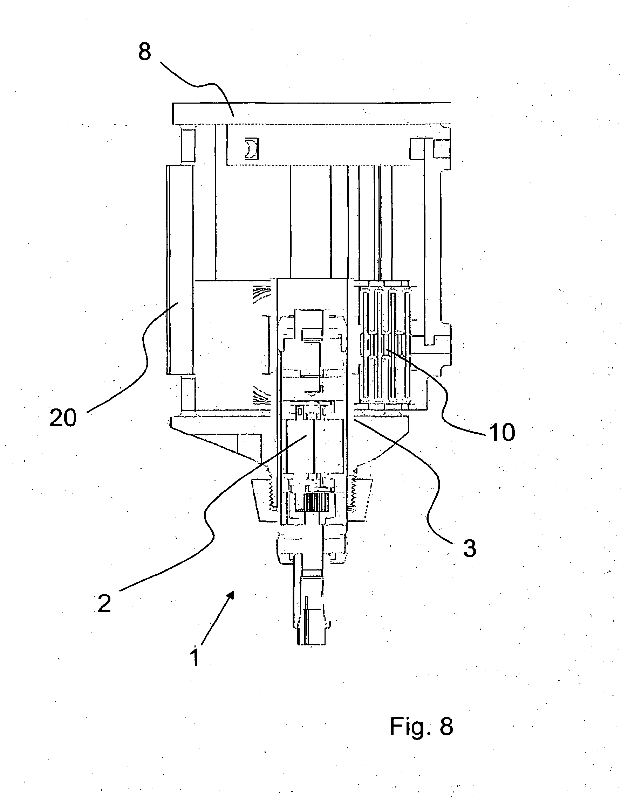

Fig. 8 zeigt eine schematische Schnittansicht des in Fig. 7 dargestellten Werkzeughalters entlang einer Mittelachse des Druckluftmotors 2.

Zu Erkennen ist insbesondere ein Auslenkgelenk 20, welches das Gehäuseoberteil 8 mit dem Halter 3, in welchen der Druckluftmotor 2 eingeschoben ist, verbindet.

Das Auslenkgelenk 20 umfasst ein Mittelteil mit größerem Querschnitt, so dass die Auslenkung im Wesentlichen an den Enden des Auslenkgelenks 20 erfolgt.

Um den Halter 3 in eine definierte Rückstellposition zu bewegen, sind als Rückstellmittel Faltenbälge 10 vorgesehen, welche einstückig mit dem Gehäuse des Werkzeugshalters 3 ausgebildet sind.

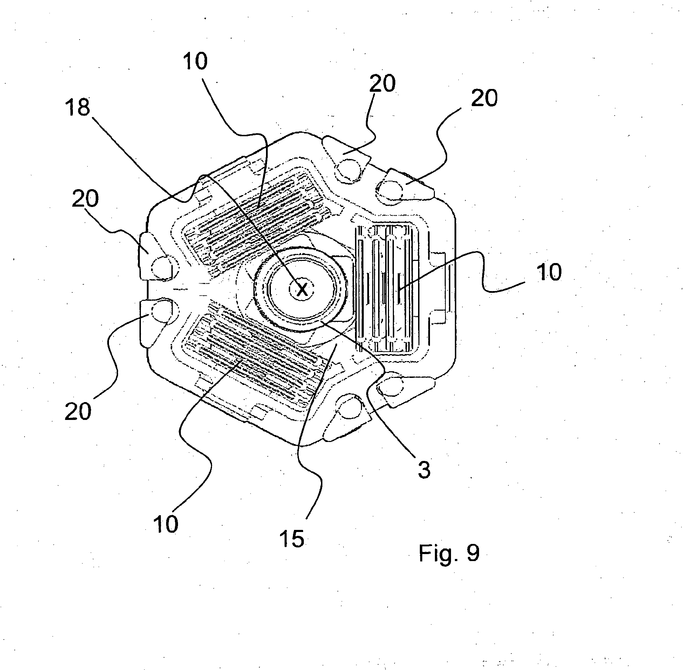

Fig. 9 zeigt eine Schnittansicht senkrecht zu einer Mittelachse 8 des Halters 3.

Zu Erkennen sind die drei Faltenbälge 10, welche den Halter 3 beim Anliegen von Druckluft in eine definierte Mittellage bringen. Entsprechend dem in den Figuren Fig. 1 bis Fig. 6 dargestellten Ausführungsbeispiel sind hierzu Anschläge 15 vorgesehen, welche den Weg der Faltenbälge begrenzen.

Weiter sind in dieser Darstellung die jeweils paarweise angeordneten Auslenkgelenke 20 zu erkennen, welche an drei Seiten des sechseckig ausgebildeten Gehäuses des Werkzeughalters angeordnet sind.

Die Erfindung ermöglicht einen leichten, kompakten und wenig störanfälligen Werkzeughalter mit Ausweichmechanismus.

### Bezugszeichenliste

- 1: Werkzeughalter
- 2: Druckluftmotor
- 3: Halter
- 4: Gehäuse
- 5: Druckluftanschluss
- 6: Druckluftanschluss
- 7: Gehäuseunterteil
- 8: Gehäuseoberteil
- 9: Fenster
- 10: Faltenbalg
- 11: Arm
- 12: Kanal
- 13: Führungsnut
- 14: Führungskragen
- 15: Fortsatz
- 16: Anlageplatte
- 17: Bohrung
- 18: Mittelachse
- 19: Kanal
- 20: Auslenkgelenk
- 21: Mutter

## Patentansprüche

1. Werkzeughalter (1) mit einem Ausweichmechanismus, umfassend einen Halter (3) zur Aufnahme eines
Werkzeugs mit einer Antriebsspindel, wobei der Halter (3) in einem Gehäuse (4) angeordnet ist und gegenüber dem Gehäuse (4) verschiebbar ist,
**dadurch gekennzeichnet, dass** der Halter (3) mittels zumindest drei Faltenbälgen (10) unter Anlegung eines pneumatisch oder hydraulisch erzeugten Drucks zentrierbar ist, wobei die Faltenbälge (10) mit zumindest einem Gehäuseabschnitt einstückig ausgebildet sind.

2. Werkzeughalter (1) mit einem Ausweichmechanismus nach dem vorstehenden Anspruch, **dadurch gekennzeichnet, dass** der Werkzeughalter (1) formschlüssig in allen Raumrichtungen in dem Gehäuse (4) gehalten ist und nur entlang einer im Wesentlichen senkrecht zu einer Mittelachse (17) des Gehäuses oder des Halters stehenden Ebene verschiebbar ist.

3. Werkzeughalter (1) mit einem Ausweichmechanismus nach einem der vorstehenden Ansprüche, **dadurch gekennzeichnet, dass** der Halter (3) gegenüber dem Gehäuse (4) in axialer Richtung einer Mittelachse (17) des Halters fixiert ist, insbesondere mittels Auslenkgelenken (20).

4. Werkzeughalter (1) mit einem Ausweichmechanismus nach einem der vorstehenden Ansprüche, **dadurch gekennzeichnet, dass** das Gehäuse (4) und die zumindest drei Faltenbälge (10) einstückig ausgebildet sind und aus einem Kunststoff, insbesondere einem Polyamid, bestehen.

5. Werkzeughalter (1) mit einem Ausweichmechanismus nach einem der vorstehenden Ansprüche, **dadurch gekennzeichnet, dass** das Gehäuse (4) ein Gehäuseunterteil (6) umfasst, in welchem der Halter (3) angeordnet ist, sowie ein Gehäuseoberteil (7), welches von dem Gehäuseunterteil (6) beabstandet ist und mittels mehrerer Arme (11) mit dem Gehäuseunterteil (6) verbunden ist.

6. Werkzeughalter (1) mit einem Ausweichmechanismus nach einem der vorstehenden Ansprüche, **dadurch gekennzeichnet, dass** die Faltenbälge (10) in einer zentrierten Position jeweils an einem Anschlag zur Anlage kommen.

7. Werkzeughalter (1) mit einem Ausweichmechanismus nach einem der vorstehenden Ansprüche, **dadurch gekennzeichnet, dass** in das Gehäuse (4) Kanäle (12, 19) zur Zuführung eines Fluids zu den Faltenbälgen integriert sind.

8. Verfahren zur Herstellung eines Werkzeughalters zur Aufnahme eines Werkzeugs mit einer Antriebsspindel (1) mit einem Ausweichmechanismus,
wobei mittels eines Rapid-Prototyping-Verfahrens, insbesondere mittels selektiven Lasersinterns, in einem Arbeitsgang ein Gehäuse (4) mit zumindest drei Faltenbälgen und ein an oder in dem Gehäuse (4) angeordneter Halter (3) zur Aufnahme eines Werkzeugs mit einer Antriebswelle hergestellt werden, derart, dass der Halter (3) in dem Gehäuse (4) eingeschlossen ist oder mit dem Gehäuse (4) einstückig ausgebildet ist.

## Claims

1. A tool holder (1) with an avoidance mechanism, comprising a holder (3) for receiving a tool having a drive shaft, wherein the holder (3) is arranged in a housing (4) and is displaceable relative to the housing (4),
**characterized in that** the holder (3) can be centered by means of at least three bellows (10) under application of a pneumatically or hydraulically generated pressure, wherein the bellows (10) are integrally formed with at least one housing portion.

2. The tool holder (1) with an avoidance mechanism according to the preceding claim, **characterized in that** the tool holder (1) is supported in the housing (4) positively engaged in all spatial directions and is only displaceable along a plane substantially perpendicular to a central axis (18) of the housing or the holder.

3. The tool holder (1) with an avoidance mechanism according to any of the preceding claims, **characterized in that** the holder (3) is fixed relative to the housing (4) in an axial direction of a central axis (18) of the holder, in particular by means of deflection joints (20).

4. The tool holder (1) with an avoidance mechanism according to any of the preceding claims, **characterized in that** the housing (4) and said at least three bellows (10) are integrally formed of a resin material, in particular a polyamide.

5. The tool holder (1) with an avoidance mechanism according to any of the preceding claims, **characterized in that** the housing (4) comprises a lower housing part (7) in which the holder (3) is arranged, and an upper housing part (8) spaced from the lower housing part (7) and joined to the lower housing part (7) by a plurality of arms (11).

6. The tool holder (1) with an avoidance mechanism according to any of the preceding claims, **characterized in that** in a centered position each of the bellows (10) engages an abutment.

7. The tool holder (1) with an avoidance mechanism according to any of the preceding claims, **characterized in that** passages (12, 19) for supplying a fluid to the bellows are integrated in the housing (4).

8. A method for producing a tool holder (1) with an avoidance mechanism for receiving a tool having a drive shaft, wherein a housing (4) with at least three bellows and with a holder (3) arranged on or in the housing (4) for receiving a tool having a drive shaft is produced in one working step by a rapid prototyping method, in particular by selective laser sintering, such that the holder (3) is enclosed in the housing (4) or is integrally formed with the housing (4).

## Revendications

1. Porte-outil (1) avec un mécanisme de dégagement, comprenant un support (3) pour la réception d'un outil avec une broche d'entraînement, ledit support (3) étant disposé dans un boîtier (4) et étant déplaçable par rapport au boîtier (4),
**caractérisé en ce que** le support (3) peut être centré au moyen d'au moins trois soufflets (10), par application d'une pression générée pneumatiquement ou hydrauliquement, les soufflets {10) étant formés d'un seul tenant avec au moins une partie du boîtier.

2. Porte-outil (1) avec un mécanisme de dégagement selon la revendication précédente, **caractérisé en ce que** ledit porte-outil (1) est maintenu par engagement positif dans le boîtier (4) dans toutes les directions spatiales et n'est déplaçable que le long d'un plan sensiblement perpendiculaire à un axe central (17) du boîtier ou du support.

3. Porte-outil (1) avec un mécanisme de dégagement selon l'une des revendications précédentes, **caractérisé en ce que** le support (3) est fixé par rapport au boîtier (4) dans la direction axiale d'un axe central (17) du support, en particulier au moyen d'articulations de débattement (20).

4. Porte-outil (1) avec un mécanisme de dégagement selon l'une des revendications précédentes, **caractérisé en ce que** le boîtier (4) et les au moins trois soufflets (10) sont formés d'un seul tenant et sont en matière plastique, en particulier un polyamide.

5. Porte-outil (1) avec un mécanisme de dégagement selon l'une des revendications précédentes, **caractérisé en ce que** le boîtier (4) comprend une pièce inférieure de boîtier (6), dans laquelle est disposé le support (3), ainsi qu'une pièce supérieure de boîtier (7) espacée de la pièce inférieure de boîtier (6) et raccordée par plusieurs bras (11) à la pièce inférieure de boîtier (6).

6. Porte-outil (1) avec un mécanisme de dégagement selon l'une des revendications précédentes, **caractérisé en ce que** dans une position de centrage, les soufflets (10) viennent respectivement s'appliquer contre une butée.

7. Porte-outil (1) avec un mécanisme de dégagement selon l'une des revendications précédentes, **caractérisé en ce que** des canaux (12, 19) d'amenée d'un fluide aux soufflets sont intégrés au boîtier (4).

8. Procédé de fabrication d'un porte-outil pour la réception d'un outil avec une broche d'entraînement (1), comprenant un mécanisme de dégagement, où un boîtier (4) avec au moins trois soufflets et un support (3) disposé contre ou dans le boîtier (4) pour la réception d'un outil avec un arbre d'entraînement sont fabriqués en un seul cycle de travail au moyen d'un procédé de prototypage rapide, en particulier par frittage laser sélectif, de telle manière que le support (3) est inclus dans le boîtier (4) ou formé d'un seul tenant avec le boîtier (4).
